(19) Europäisches Patentamt

European Patent Office

Office européen des brevets

(11) Numéro de publication : **0 310 492 B1**

(12) **FASCICULE DE BREVET EUROPEEN**

(45) Date de publication du fascicule du brevet :
**22.01.92 Bulletin 92/04**

(51) Int. Cl.$^5$ : **D06F 37/00**, F16C 37/00

(21) Numéro de dépôt : **88402432.4**

(22) Date de dépôt : **27.09.88**

(54) **Machine à laver et/ou sécher le linge, à paliers de tambour munis de dispositifs de refroidissement.**

(30) Priorité : **02.10.87 FR 8713665**

(43) Date de publication de la demande :
**05.04.89 Bulletin 89/14**

(45) Mention de la délivrance du brevet :
**22.01.92 Bulletin 92/04**

(84) Etats contractants désignés :
**DE ES FR GB GR IT SE**

(56) Documents cités :
**DE-A- 1 585 814
DE-B- 1 251 265
FR-A- 494 508**

(73) Titulaire : **ESSWEIN S.A.
Route de Cholet
F-85002 La Roche-sur-Yon (FR)**

(72) Inventeur : **Herve, Jean-Claude
SCPI-19, avenue de Messine
F-75008 Paris (FR)**
Inventeur : **Flavien, Gérard
SCPI-19, avenue de Messine
F-75008 Paris (FR)**

(74) Mandataire : **Phan, Chi Quy et al
THOMSON-CSF SCPI
F-92045 PARIS LA DEFENSE CEDEX 67 (FR)**

EP 0 310 492 B1

## Description

La présente invention concerne une machine à laver et/ou sécher le linge, à paliers de tambour munis de dispositifs de refroidissement. Une telle machine est connue par le DE-A-1585814.

Une machine à laver et/ou sécher le linge comprend habituellement un tambour à axe horizontal à linge tournant dans des paliers supportés par des parois latérales ou flasques d'une cuve de la machine. Dans une phase de lavage où le tambour à linge tourne à une vitesse de l'ordre de 50 tours/minute, les paliers qui maintiennent en rotation ce tambour à linge, s'échauffent mais leur température reste souvent dans des limites raisonnables lorsque la cuve de la machine est en métal ou un matériau bon conducteur de la chaleur. Quand la cuve de la machine est réalisée en un matériau synthétique ou un matériau mauvais conducteur thermique, la température des paliers, notamment des paliers lisses, peut atteindre des valeurs excessives. Dans une phase d'essorage où le tambour à linge tourne à une vitesse allant de 400 à 1000 tours/minute, les paliers notamment des paliers lisses s'échauffent encore davantage et leur température peut atteindre parfois des valeurs inadmissibles entraînant soit un grippage des parties tournantes soit une usure prématurée de ces parties.

La présente invention ayant pour but d'éviter ces inconvénients permet de réaliser une machine pourvue de paliers munis de dispositifs de refroidissement efficaces.

Selon l'invention, une machine à laver et/ou sécher le linge, à paliers de tambour munis de dispositifs de refroidissement est caractérisée en ce qu'elle comprend d'une part un moyeu fixé sur une partie centrale renforcée d'une paroi latérale de la cuve, servant à la fois de support à un palier et de dispositif statique de refroidissement, et d'autre part une coupelle à ailettes fixée sur l'extrémité extérieure d'arbre du tambour jouant en même temps le rôle d'un cache-palier et celui d'un dispositif dynamique de refroidissement.

Pour mieux faire comprendre l'invention on en décrit ci-après un exemple de réalisation schématiquement illustré par des dessins ci-annexés dont :
— La figure 1 représente une vue schématique en perspective d'une machine à laver le linge à tambour horizontal, réalisée selon l'invention, et
— La figure 2 représente à une autre échelle, une vue en coupe axiale d'un palier étanche du tambour de la machine à laver de la figure 1.

L'invention est applicable aux machines à laver le linge, aux machines à sécher le linge et aux lavant-séchant à tambour horizontal à linge, monté dans une cuve réalisée en métal ou en une matière synthétique.

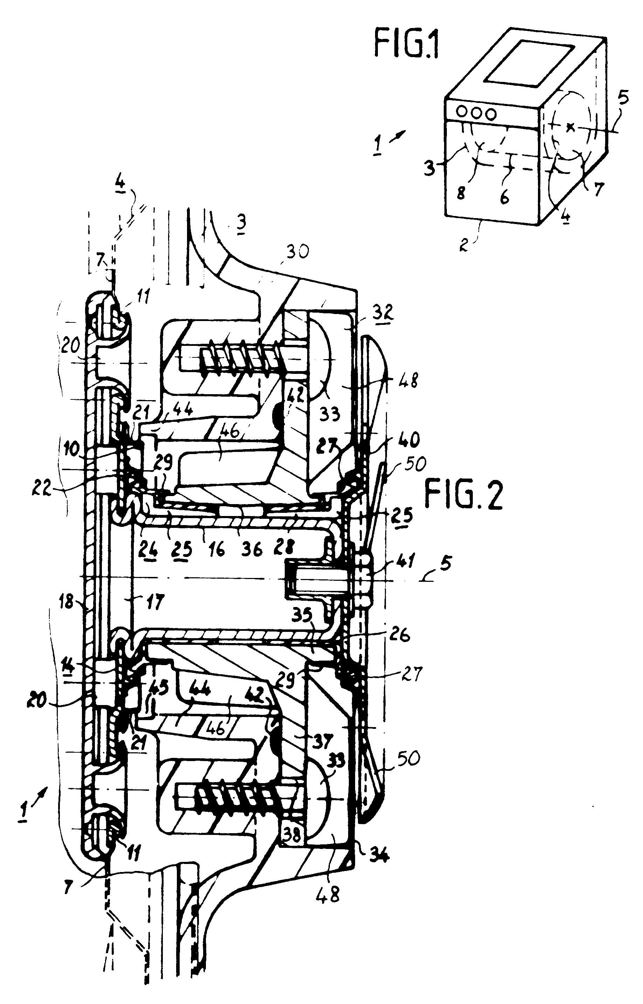

Une machine à laver le linge 1, selon un exemple de réalisation de l'invention, illustrée schématiquement et partiellement dans les figures 1 et 2, comprend une carrosserie 2, une cuve en matière synthétique 3, un tambour à linge 4 tournant autour d'un axe horizontal 5.

Le tambour à linge 4 réalisé en tôle métallique comprend une virole cylindrique 6 et deux flasques d'extrémité 7 et 8. Les flasques 7 et 8 dont l'un 7 est partiellement représenté dans la figure 2, sont respectivement pourvus dans leur zone centrale d'un trou central 10 et de plusieurs trous de fixation 11 alignés suivant un cercle et régulièrement espacés. La zone centrale des flasques 7 et 8 est doublée par une couronne de renforcement 14 qui est immobilisée en place par sertissage sur le long des bords des trous de fixation 11 de ces flasques, et prolongée dans son centre, perpendiculairement à sa surface, par un bout d'arbre tubulaire 16, coaxial à l'axe 5 de rotation du tambour à linge 4. Le bout d'arbre 16 est serti par une 17 de ses extrémités, sur le long du bord circulaire intérieur de la couronne de renforcement 14. La zone centrale des flasques 7 et 8 munie de la couronne de renforcement 14 et du bout d'arbre 16 est protégée du côté intérieur du tambour à linge 4 par un cache circulaire 18 maintenu en place par des têtons tubulaires 20 sertis par évasement de leurs bords libres sur le long des bords des trous de fixation 11 de ces flasques 7 et 8. La bordure du trou central 10 des flasques 7 et 8 est soulevée ou décollée de la surface de la couronne de renforcement 14 et mise sous forme d'une collerette axialement saillante 21 pour créer sur la surface de la couronne ainsi dégagée une piste circulaire de glissement 22 pour un joint d'étanchéité et transformer cette collerette 21 en un anneau de protection mécanique de ce joint d'étanchéité.

Selon une caractéristique importante, une machine à laver et/ou sécher le linge à paliers de tambour munis de dispositifs de refroidissement comprend d'une part un moyeu 32 fixé sur une partie centrale renforcée 30 d'une paroi latérale ou flasque de la cuve 3, servant à la fois de support à ce moyen fixe de maintien en rotation 24 et de dispositif statique de refroidissement et d'autre part une coupelle 40 à ailettes 50, fixée sur l'extrémité extérieure de ce bout d'arbre 16 du tambour 4 par une vis 41, jouant en même temps le rôle d'un cache-palier et celui d'un dispositif dynamique de refroidissement.

Selon une autre caractéristique, la machine à laver et/ou sécher le linge à paliers de tambour munis de dispositifs de refroidissement comprend comme un palier de ce tambour, un moyen fixe de maintien en rotation 24 d'un bout d'arbre 16 de ce tambour, qui, monté sur le moyeu 32 et s'appuyant par une de ses extrémités sur une surface lisse faisant partie de ce tambour et se trouvant à proximité de ce bout d'arbre, assure parallèlement deux fonctions essentielles, celle d'un palier lisse, et celle d'un joint d'étanchéité au liquide.

Un moyen fixe de maintien en rotation 24 est constitué par au moins un élément tubulaire 25 comportant deux parties, une partie cylindrique 26 supportant libre en rotation un bout d'arbre 16 du tambour à linge 4 et lui servant de palier lisse et une partie tronconique 27 formée en soufflet, servant de joint d'étanchéité dont l'extrémité extérieure libre, élastiquement appliquée contre une surface lisse d'une partie intégrante ou solidaire de ce tambour tournant 4 prolongeant ce bout d'arbre 16, assure une étanchéité au liquide entre ce moyeu fixe de maintien en rotation 24 et ce tambour 4 ou ce bout d'arbre 16 autrement dit entre l'intérieur du tambour à linge 4 et le milieu extérieur.

Le moyeu 32 comprend une partie centrale tubulaire 35 et à proximité de l'une des extrémités de celle-ci, une collerette radiale de fixation 37. La partie centrale tubulaire 35 présente des extrémités saillantes vers l'extérieur et comprend dans son alésage de une ou plusieurs rainures axiales 36 régulièrement espacées, et sur sa surface extérieure dans la partie la plus grande de celle-ci, des ailettes axiales espacées 46. La collerette radiale de fixation 37 est munie de trous espacés 38 de passage pour des vis de fixation 33 et sur sa face opposée à celle prolongée par des ailettes axiales 46, d'ailettes radiales espacées 48. Les ailettes axiales 46 et les ailettes radiales 48 destinées à augmenter la surface de contact respectivement de la partie centrale tubulaire 35 et de la collerette radiale de fixation 37 du moyeu 32 avec le milieu ambiant, transforment ce moyeu 32 en un dispositif statique de refroidissement pour évacuer la chaleur dégagée par le palier lisse du tambour 4, constitué par le moyen de maintien de rotation 24.

Dans l'exemple illustré à la figure 2, le moyen fixe de maintien en rotation 24 comprend deux éléments tubulaires identiques 25 montés sur les deux extrémités saillantes de la partie tubulaire du moyeu 32. Ces deux éléments tubulaires identiques 25 comprennent dans leurs parties cylindriques 26 des nervures axiales 28 dont le nombre est égal à celui des rainures axiales 36 du moyeu 32, et dans leurs parties tronconiques 27 aux extrémités reliées à leurs parties cylindriques 26 des lèvres circulaires 29. Les nervures axiales 28 des éléments tubulaires 25 insérées dans les rainures axiales 36 du moyeu 32 empêchent ces éléments tubulaires 25 du moyen fixe de maintien en rotation 24, d'être entraînés en rotation par le bout d'arbre 16 du tambour 4 tandis que les lèvres circulaires 29 s'agrippant sur les extrémités en saillie du moyeu 32 assurent à la fois une fixation des éléments tubulaires 25 sur le moyeu 32 et une étanchéité au liquide entre ceux-ci.

Dans l'exemple illustré sur le côté intérieur de la cuve 3, le bord libre de la partie tronconique 27 de l'élément tubulaire 25 du moyen fixe de maintien en rotation 24, est appliqué contre la couronne de renforcement 14 du tambour tournant 4, sur la partie à surface lisse constituant une piste circulaire de glissement 22, pour assurer une étanchéité au liquide entre l'intérieur du tambour 4 et l'extérieur, au niveau du bout d'arbre 16 où le moyen fixe de maintien en rotation 24 joue le rôle d'un palier lisse. Sur le côté extérieur de la cuve 3, le bord libre de la partie tronconique 27 de l'élément tubulaire 25 du moyen fixe de maintien en rotation 24, est appliqué contre une surface lisse de la coupelle 40 pour assurer une étanchéité au liquide et aux poussières entre l'intérieur du tambour 4 et l'extérieur au niveau de ce palier.

Un joint torique 42 est monté entre le moyeu 32 et la cuve 3 pour réaliser une étanchéité au liquide entre ceux-ci. L'étanchéité au liquide entre l'intérieur et l'extérieur de la cuve 3 est ainsi assurée par les moyens de maintien en rotation 24 au niveau des paliers lisses du tambour 4 et par le joint torique 42 au niveau de la cuve 3 et du moyeu 32. Par son poids, l'eau ou liquide de lavage à l'intérieur de la cuve 3 applique élastiquement le bord libre de la partie souple tronconique formée en soufflet 27 du moyen de maintien en rotation 24, contre la piste de glissement 22 et la lèvre circulaire 29 contre l'extrémité du moyeu 32, et tend ainsi à renforcer l'étanchéité au liquide assurée par le moyen de maintien en rotation 24.

La collerette saillante 21, obtenue par repliage de la bordure du trou central 10 des flasques 7 et 8 forme avec un bossage tubulaire coaxial 44 de la zone centrale renforcée 30 de la paroi latérale ou flasque de la cuve 3, un passage en chicane de protection mécanique 45 empêchant des gros éléments rigides qui séjournent éventuellement dans l'eau ou liquide de lavage dans la cuve 3, d'entrer en contact avec le moyen de maintien en rotation 24 et d'éviter ainsi efficacement tout dommage mécanique à ce dernier.

Dans l'exemple illustré, le moyen fixe de maintien de rotation 24 est réalisé en une matière synthétique d'un type connu présentant une bonne résistance à l'usure mécanique, un faible coefficient de friction et un bon degré de flexibilité. Le moyeu 32 est réalisé en un matériau rigide résistant à la corrosion et bon conducteur de la chaleur choisi parmi les alliages d'aluminium, les métaux et alliages inoxydables.

La coupelle 40 qui a une dimension sensiblement égale à celle du moyeu 32 autrement dit à celle de la collerette de fixation 37, comprend une partie centrale en forme d'une cuvette à surface lisse, et une partie périphérique comportant des ailettes 50. La coupelle 40 à ailettes 50 est réalisée en une matière synthétique ou une tôle métallique découpée et emboutie.

Au cours d'un fonctionnement de la machine 1, d'un côté la partie centrale tubulaire 35, la zone centrale de la collerette de fixation 37 et les ailettes axiales 46 du moyeu 32 qui sont souvent en contact avec l'eau en continuel mouvement dans la cuve 3, transfèrent à cette eau une partie de la chaleur dégagée par le palier lisse constitué par le moyen de maintien en rotation 24 et de l'autre côté, la collerette de fixation 37 et les ailettes radiales 48 du moyeu 32 évacuent dans l'air ambiant la partie restante de la chaleur dégagée par le palier lisse de manière à donner à ce moyeu 32 qui sert, en tant que première fonction de support au moyen de maintien en rotation 24, une deuxième fonction d'un dispositif statique de refroidissement du palier à tambour 4. Pendant ce temps le tambour à linge 4 tourne et entraîne en rotation la coupelle 40 à ailettes 50 fixée à l'extrémité de son bout d'arbre 16. Dans son mouvement de rotation, la coupelle 40 à ailettes 50 créant un courant d'air qui est dirigé sur le moyeu 32, contribue à intensifier l'échange thermique entre ce moyeu et l'air ambiant et accélérer l'évacuation par ce moyeu 32, à travers sa collerette de fixation 37 et ses ailettes radiales 48, de la chaleur dégagée par le palier lisse constitué par le moyen de maintien en rotation 24, de manière à donner à cette coupelle 40 à ailettes 50 qui sert, en tant que première fonction, d'un cache-palier, une deuxième fonction d'un dispositif dynamique de refroidissement.

Quand l'eau est évacuée de la cuve 3 durant la phase d'essorage par exemple, la partie centrale tubulaire 35 et les ailettes axiales 46 du moyeu 32 continuent à transférer de la chaleur dégagée par le palier, dans l'air ambiant à l'intérieur de la cuve 3 et gardent ainsi pour ce moyeu 32 une fonction de dispositif statique de refroidissement de ce palier.

Dans une variante de réalisation non représentée, le moyen fixe de maintien en rotation 24 d'un bout d'arbre 16 du tambour 4 comprend un seul élément tubulaire 25 monté sur l'extrémité intérieure du moyeu 32. La partie cylindrique 26 de l'élément tubulaire 25 comprend alors une longueur sensiblement égale à celle de la partie tubulaire du moyeu 32 tandis que la partie tronconique formée en soufflet 27 a une dimension équivalente à celle de la partie tronconique 27 de l'élément tubulaire 25 de l'exemple illustré à la figure 2. Dans cette variante de réalisation, le moyeu 32 joue toujours un double rôle, celui d'un support d'un moyen de maintien en rotation 24 et celui d'un dispositif statique de refroidissement du palier, et la coupelle 40 à ailettes 50 continue à remplir sa double fonction, celle d'un cache-palier et celle d'un dispositif dynamique de refroidissement du palier.

Le moyeu 32 et la coupelle 40 à ailettes 50 qui évacuent efficacement la chaleur dégagée par les paliers du tambour 4, permettent de maintenir la température de ces paliers dans des limites admissibles sans provoquer ni grippage ni usure prématurée de ces derniers. En outre, le moyen de maintien en rotation 24, le moyeu 32 et la coupelle 40 qui sont constitués d'un nombre réduit d'éléments faciles à fabriquer et à monter, contribuent à rendre économique la machine à laver et/ou sécher fabriquée sans compromettre ni son bon fonctionnement ni sa durée de vie.

## Revendications

1. Machine à laver et/ou sécher le linge, à paliers de tambour munis de dispositifs de refroidissement, caractérisée en ce qu'elle comprend d'une part un moyeu (32) fixé sur une partie centrale renforcée (30) d'une paroi latérale de la cuve (3), servant à la fois de support à un palier (24) et de dispositif statique de refroidissement, et d'autre part une coupelle (40) à ailettes (50) fixée sur l'extrémité extérieure d'arbre (16) du tambour (4) jouant en même temps le rôle d'un cache-palier et celui d'un dispositif dynamique de refroidissement.

2. Machine selon la revendication 1, caractérisée en ce qu'elle comprend comme un palier de ce tambour (4), un moyen fixe de maintien en rotation (24) d'un bout d'arbre (16) de ce tambour, qui, monté sur le moyeu (32) et s'appuyant par une de ses extrémités sur au moins une surface lisse (22, 40) faisant partie de ce tambour (4) et se trouvant à proximité de ce bout d'arbre (16), assure parallèlement deux fonctions essentielles, celle d'un palier lisse et celle d'un joint d'étanchéité au liquide.

3. Machine selon l'une des revendications 1 et 2, caractérisée en ce que le moyeu (32) comprend d'une part une partie centrale tubulaire (35) à extrémités saillantes vers l'extérieur et munie dans son alésage d'au moins une rainure axiale (36) et sur sa surface extérieure d'ailettes axiales espacées (46) et d'autre part à proximité de l'une des extrémités de cette partie centrale tubulaire (35), une collerette radiale de fixation (37) munie de trous espacés (38) pour le passage des vis de fixation (33), et sur sa face opposée à celle prolongée par des ailettes axiales (46), d'ailettes radiales espacées (48).

4. Machine selon l'une des revendications 2 et 3, caractérisée en ce que le moyen fixe de maintien en rotation (24) est constitué par au moins un élément tubulaire (25) comportant deux parties, une partie cylindrique (26) montée sur le moyeu (32) et supportant en rotation un bout d'arbre (16) du tambour (4) et lui servant de palier lisse et une partie tronconique (27) formée en soufflet servant de joint d'étanchéité dont l'extrémité libre est élastiquement appliquée contre une surface lisse (22) d'une partie de ce tambour (4).

5. Machine selon la revendication 4, caractérisée en ce que le moyen fixe de maintien en rotation (24) comprend deux éléments tubulaires identiques (25) pourvus dans leurs parties cylindriques (26), de nervures axiales (28) qui sont insérées dans les rainures axiales (36) du moyeu (32) lors d'un montage dans ce dernier, et dans leurs parties tronconiques (27) aux extrémités reliées à leurs parties cylindriques (26), de lèvres circulaires (29) qui s'agrippent aux extrémités saillantes de la partie centrale tubulaire (35) du moyeu (32) lors d'une fixation sur celle-ci.

6. Machine selon l'une des revendications 1 à 3, caractérisée en ce que le moyeu (32) est réalisé en un matériau rigide, résistant à la corrosion et bon conducteur de la chaleur.

7. Machine selon la revendication 6, caractérisée en ce que le moyeu (32) est réalisé en un matériau choisi parmi les alliages d'aluminium, les métaux et alliages inoxydables.

8. Machine selon l'une des revendications 1 et 2, caractérisée en ce que la coupelle (40) comprend une partie centrale en forme d'une cuvette à surface lisse et une partie périphérique comportant des ailettes (50).

9. Machine selon l'une des revendications 1 et 8, caractérisée en ce que la coupelle (40) à ailettes (50) a une dimension sensiblement égale à celle du moyeu (32).

10. Machine selon l'une des revendications 1,8 et 9, caractérisée en ce que la coupelle (40) à ailettes (50) est réalisée en un matériau choisi parmi une matière synthétique et une tôle métallique.

## Claims

1. A washing and/or drying machine having drum bearings provided with cooling devices, characterized in that it comprises on the one hand a hub (32) fixed to a reinforced central part (30) of a lateral wall of the tank (3) which acts both as support of a bearing (24) and as static cooling device, and on the other hand a shell (40) provided with ribs (50) and fixed to the outer end of the shaft (16) of the drum (4), said shell constituting both a bearing shield and a dynamic cooling device.

2. A machine according to claim 1, characterized in that it comprises, as bearing of the drum (4), a stationary means (24) for rotatively maintaining a shaft end (16) of this drum, this means which, mounted on the hub and bearing by one of its ends against at least one smooth surface (22, 40), which constitutes an integral part of the drum (4) and is located close to this shaft end (16), ensures parallelly two essential functions, namely that of a smooth bearing and that of a liquid seal.

3. A machine according to one of claims 1 and 2, characterized in that the hub (32) comprises, on the one hand, a central tubular part (35) provided with outwardly projecting ends and supplied in its bore with at least one axial groove (36) and on its outer surface with axial spaced ribs (46), and on the other hand, close to one of the ends of this tubular central part (35), a radial mounting collar (37) supplied with spaced holes (38) for receiving mounting screws (33) and on its side opposite to the one which is extended by axial ribs (46) with spaced radial ribs (48).

4. A machine according to one of claims 2 and 3, characterized in that the stationary means (24) for rotatively maintaining the shaft end is constituted by at least one tubular element (25) comprising two portions, a cylindrical portion (26) mounted on the hub (32) and rotatively supporting a shaft end (16) of the drum (4) and acting as smooth bearing, and a frustoconical portion (27) consisting of sealing bellows whose free end is resiliently applied against a smooth surface (22) of a portion of the drum (4).

5. A machine according to claim 4, characterized in that the stationary means (24) for rotatively maintaining the shaft ends include two identical tubular elements (25) provided in their cylindrical portions (26) with axial ribs (28) which are inserted into the axial grooves (36) of the hub (32) when being mounted in the hub, and in their frustoconical portions (27) at the ends connected to their cylindrical portions (26) with circular lips (29) which clutch at projecting ends of the central tubular portion (35) of the hub (32) during their fixation thereon.

6. A machine according to one of claims 1 to 3, characterized in that the hub (32) is made of a rigid material which resists corrosion and which is a good heat conductor.

7. A machine according to claim 6, characterized in that the hub (32) is made of a material selected from aluminium alloys and stainless metals and alloys.

8. A machine according to one of claims 1 and 2, characterized in that the shell (40) comprises a central part made of a cap with a smooth surface, and a peripheral part including ribs (50).

9. A machine according to one of claims 1 and 8, characterized in that the shell (40) which is provided with ribs (50) is of substantially the same size as the hub (32).

10. A machine according to one of claims 1, 8 and 9, characterized in that the shell (40) which is provided with ribs (50) is realised from a material selected among synthetic materials and metal sheet.

## Patentansprüche

1. Wasch- und/oder Trockenmaschine, deren Trommellager mit Kühlvorrichtungen versehen sind, dadurch gekennzeichnet, daß sie einerseits einen Nabe (32), die auf einem verstärkten zentralen Teil (30) einer Seitenwand des Behalters (3) befestigt ist und sowohl ein Lager (24) tragt als auch als statische Kühlvorrichtung wirkt, und andererseits eine Schale (40) mit Rippen (50) aufweist, die auf dem äußeren Ende der Welle (16) der Trommel (4) befestigt ist und sowohl als Lagerschild als auch als dynamische Kühlvorrichtung wirkt.

2. Maschine nach Anspruch 1, dadurch gekennzeichnet, daß sie als Lager der Trommel (4) ein ortsfestes Mittel (24) aufweist, das einen Wellenstumpf (16) der Trommel drehend festhalt und parallel zwei wesentliche Funktionen erfüllt, namlich die eines glatten Lagers und die einer Abdichtung gegen Flüssigkeit, wobei das ortsfeste Mittel (24) auf der Nabe (32) montiert ist und sich mit einem seiner Enden auf mindestens einer glatten Oberflache (22, 40) abstützt, die Teil der Trommel (4) ist und sich in der Nähe des Wellenstumpfs (16) befindet.

3. Maschine nach einem der Ansprüche 1 und 2, dadurch gekennzeichnet, daß die Nabe (32) einerseits einen zentralen rohrförmigen Bereich (35) mit nach außen vorspringenden Enden besitzt, der im Rohrinneren mindestens eine axiale Rinne (36) und auf seiner äußeren Oberflache in Abstand voneinander axiale Rippen (46) besitzt, und andererseits in der Nahe eines der Enden dieses rohrförmigen zentralen Bereichs (35) einen radialen Befestigungskragen (37) besitzt, der im Abstand voneinander Löcher (38) für den Durchlaß von Befestigungsschrauben (33) und auf der Seite, die der von den axialen Rippen (46) verlängerten Seite entgegengesetzt liegt, radiale Rippen (48) in Abstand voneinander aufweist.

4. Maschine nach einem der Ansprüche 2 und 3, dadurch gekennzeichnet, daß das ortsfeste Mittel (24), um den Wellenstumpf (16) drehend festzuhalten (24), aus mindestens einem Rohrelement (25) gebildet wird, das zwei Teile besitzt, nämlich einen zylindrischen Teil (26), der auf der Nabe (32) montiert ist, und einen Wellenstumpf (16) der Trommel (4) drehend trägt und somit als Gleitlager dient, und einen kegelstumpfförmigen Teil (27), der als Balg ausgebildet ist und als Dichtung wirkt, wobei das freie Ende dieses Balgs elastisch gegen eine glatte Oberfläche (22) eines Teils der Trommel (4) anliegt.

5. Maschine nach Anspruch 4, dadurch gekennzeichnet, daß das ortsfeste Mittel (24) zwei gleiche rohrförmige Elemente (25) aufweist, die in ihren zylindrischen Bereichen (26) axiale Rippen (28) besitzen, welche bei einer Montage in der Nabe (32) in deren axiale Rinnen (36) eingefügt werden, und daß die kegelstumpfförmigen Teile (27) der rohrförmigen Elemente (25) an den an die zylindrischen Teile (26) anschließenden Enden ringförmige Lippen (29) besitzen, die sich an den vorspringenden Enden des zentralen rohrförmigen Bereichs (35) der Nabe (32) bei einer Befestigung auf dieser Nabe festkrallen.

6. Maschine nach einem der Ansprüche 1 bis 3, dadurch gekennzeichnet, daß die Nabe (32) aus einem starren Material besteht, das der Korrosion widersteht und ein guter Wärmeleiter ist.

7. Maschine nach Anspruch 6, dadurch gekennzeichnet, daß die Nabe (32) aus einem Material besteht, das aus Aluminiumlegierungen und rostfreien Metallen und Legierungen ausgewählt wird.

8. Maschine nach einem der Ansprüche 1 und 2, dadurch gekennzeichnet, daß die Schale (40) einen zentralen Bereich in Form eines Beckens mit glatter Oberfläche und einen peripheren Bereich mit Rippen (50) enthält.

9. Maschine nach einem der Ansprüche 1 und 8, dadurch gekennzeichnet, daß die Schale (40) mit ihren Rippen (50) im wesentlichen die gleichen Abmessungen wie die Nabe (32) besitzt.

10. Maschine nach einem der Ansprüche 1, 8 und 9, dadurch gekennzeichnet, daß die Schale (40) mit ihren Rippen (50) entweder aus Kunststoff oder aus einem Metallblech ist.

FIG.1

FIG.2